# EUROPEAN PATENT APPLICATION

(11) **EP 4 354 682 A1**
(43) Date of publication of application: **17.04.2024**
(21) Application number: 22382963.1
(22) Date of filing: 11.10.2022
(51) Int. Cl.: H02G 3/12, H02G 3/14, H01H 9/02, H02G 3/08, H01R 4/48, H01R 25/00

(54) **CONTROL SYSTEM FOR THE ASSEMBLY OF AN ELECTRICAL MODULAR UNIT AND ELECTRICAL INSTALLATION WITH THIS SYSTEM**

(71) Applicant: Schneider Electric España, S.A., 08019 Barcelona (ES)
(72) Inventor: REBOLÉ OLLETA, José Antonio, 31100 Puente La Reina (Navarra) (ES); BELZUNCE GALBARRA, Alfonso, 31100 Puente La Reina (Navarra) (ES); GONZÁLEZ IRIBAS, Aitor, 31100 Puente La Reina (Navarra) (ES); PECCOUD, Bruno, 38100 Grenoble (FR)
(74) Representative: Plasseraud IP

(57) **Abstract**

The present invention relates to an adjustment system for assembling an electrical modular unit (4) which can be inserted into a wall (5), the adjustment system comprising: an aesthetic cover (1) which can be fixed to the unit (4) by means of a support frame (3) for said unit (4), an adjustment element (2) which is assembled such that it is fixed to the aesthetic cover (1) and supported on the wall (5), being configured to allow a relative elastic movement between the aesthetic cover (1) and the wall (5) in a direction perpendicular to the wall (5), wherein the adjustment element (2) comprises at least one bearing segment (2.3) for being supported on the wall (5), joined to at least one elastic element (2.1), wherein the aesthetic cover (1) has an outer wall (1.1) arranged at least partially around the adjustment element (2), acting as a lateral stop for at least part of the bearing segments (2.3) when it moves elastically.

## Description

### Technical field

The field of application of the present invention is the sector for assembling aesthetic covers for electrical modular units which are inserted into the wall, such as plugs or switches, and in which the aesthetic cover may present misalignments due to poor conditioning of the wall or of the electrical elements installed on the wall.

### State of the art

Coupling aesthetic covers, colloquially called trims or surrounds, on electrical modular units to give a better impression or appearance, is a common practice on the market. Aesthetic covers are usually easy to clean, flat or have uniform surfaces, and different colors to choose from according to tastes or the environment.

Electrical modular units are assembled in a hole in the wall through which cables pass, where an installation box, generally made of plastic or metal, is placed to act as a base and in which the electrical modular unit to be used, such as a plug, is introduced. They usually have a support frame, generally made of metal or plastic, which is screwed to the wall or to the installation box, to serve as a base for fixing the aesthetic cover. In the case of multiple electrical modular units, the support frames can be common to several units or can be individual support frames.

To that end, the aesthetic cover offers the opportunity of covering irregularities on the wall and the different installation elements, giving a clean and uniform impression of the product. However, electrical installations present alignment irregularities due to the presence of defects in the elements or walls, which are not always solved with the different known aesthetic covers.

In general, they are minor misalignments, but the placement of the aesthetic cover with a more uniform finish highlights the defects, making them more visible and conspicuous. The support frame has holes in which an anchor of the rear part of the aesthetic cover is fixed, with retention thereby being established. For example, if the support frame is not placed completely parallel to the wall, it may not fit properly, or a gap may be created between the aesthetic cover and the wall.

In the case of modular elements, such as the installation of three electrical modular units together, alignment errors may arise. For example, a space may remain between two aesthetic covers, or they may be arranged at different heights. Errors related to the wall, such as height misalignments between aesthetic covers, may also arise. One solution is to use a frame common to all the electrical modular units, although this may entail a difficult insertion due to misalignments between the electrical units or support frames themselves.

Document WO2019145815 shows an adjustment system according to the preamble of claim 1. This document discloses an adjustment system comprising an aesthetic cover and an adjustment element surrounding the aesthetic cover. The adjustment element has a structure and elastic elements which allow the aesthetic cover to float with respect to the wall during the assembly thereof. However, this system has the drawback that it is not very robust since the adjustment element is floating.

To that end, the object of the present invention is to provide an adjustment system for assembling electrical modular units which overcomes the mentioned drawbacks of the state of the art, in which the alignment of the aesthetic cover is ensured in a robust and safe manner.

### Object of the invention

The object of the invention relates to an adjustment system for assembling an electrical modular unit which can be inserted into a wall. The adjustment system comprises: an aesthetic cover which can be fixed to an electrical modular unit by means of a support frame for said unit and an adjustment element which is assembled such that it is fixed to the aesthetic cover and supported on the wall. The adjustment system is configured to allow a relative elastic movement between the aesthetic cover and the wall in a direction perpendicular to the wall, wherein the adjustment element comprises at least one bearing segment for being supported on the wall, joined to at least one elastic element, wherein the aesthetic cover has an outer wall arranged at least partially around the adjustment element, acting as a lateral stop for at least part of the bearing segments when it moves elastically.

The adjustment element is therefore retained between the aesthetic cover and the support frame, with the bearing segments coming into contact with the outer wall, such that the aesthetic cover is fixed to the support frame and also by means of the segments. At least one bearing segment contacts an outer wall of the aesthetic cover, making the fixing more robust.

Said outer wall further provides guidance in the movement of the aesthetic cover during assembly by establishing a lateral stop which prevents the lateral movement of the segments from exceeding a limit.

The adjustment element has at least one elastic element, in the form of an extension from a bearing segment of the adjustment element to the aesthetic cover. Preferably, there are four elastic elements, located close to each corner of the aesthetic cover to provide stability, although the elastic elements can be in any number and in different shapes.

Alternatively, there can be only one elastic element which emerges from a bearing segment. Said elastic element can have a circular shape at its end which offers uniform support on the inner face of the aesthetic cover. The inner face of the aesthetic cover is understood as the one facing the support frame and is not visible once the aesthetic cover is fixed to the support frame.

The adjustment element consists of at least one bearing segment that provides support on the wall. The bearing segment, in the assembly position, is supported on the wall and the elastic elements arranged on the bearing segment elastically push the aesthetic cover perpendicular to the wall, with retentions between the aesthetic cover and the support frame remaining stable. This allows the correct alignment between the functional frame and the wall, as well as the fixing with the support frame.

Alternatively, it can consist of different bearing segments, for example, in the form of straight sections or corners. These segments can be configured in the shape of a square or rectangle, or any other geometric configuration. Optionally, these segments can also be elastic.

The adjustment element is arranged, by means of the bearing segments, at least partially surrounding the support frame of the electrical modular unit. The adjustment element is supported on the wall and covered by the aesthetic cover, particularly at least partially surrounded by the outer wall. This outer wall of the aesthetic cover is arranged in a manner perpendicular to the wall or in an oblique manner, where the entire adjustment element can be surrounded on the perimeter.

It is contemplated that the aesthetic cover is formed by a single part with an aesthetic exterior finish. This finish can be by means of reliefs or colors or in any other form. Alternatively, the aesthetic cover can be made in two parts; a cover frame in which the adjustment element is fixed and a covering for the cover which is arranged over the cover frame. Both parts have a respective fixing, for example, by means of elastic fitting or by means of gluing.

This allows the covering for the cover to be made of a real material, such as wood or stone, for example. It is not feasible to make the aesthetic cover from some materials, therefore making the cover in two parts solves this drawback. Furthermore, it is adaptable to different designs, for example, by means of different materials, thereby allowing aesthetic versatility.

The outer wall establishes a lateral stop which causes the bearing segment to not be able to move laterally and immobilizes it when they are in contact. When the aesthetic cover is placed on the support frame, the distance of the aesthetic cover to the wall is reduced. The bearing segment on the wall can be moved laterally due to the force of the elastic element when the aesthetic cover is anchored to the support frame. The outer wall establishes said stop, thereby allowing the segment to have a double support, on one hand, on the outer wall of the aesthetic cover, and on the other hand, on the wall. The elastic element can therefore correctly exert force against the aesthetic cover.

The elastic elements can be fixed to the aesthetic covers. Preferably, the elastic elements have fixing members for fixing to the aesthetic cover at the ends thereof. Fixing is performed in a pre-assembly position, i.e., before the placement of the aesthetic cover on the support frame. This fixing can be by means of mechanical attachments, such as riveting, or by means of elastic attachments, such as clipping. This fixing allows the attachment of the aesthetic cover and the adjustment element, such that they form a single part.

In an alternative embodiment, the elastic element may have more than one fixing member for fixing to the aesthetic cover. The fixing members can be distributed along the elastic element, thereby allowing a stronger attachment between the adjustment element and the aesthetic cover.

The aesthetic cover can also have an inner lateral stop for the bearing segments, formed by an inner wall which prevents lateral movement towards the inside of the adjustment element. This therefore provides greater robustness in the fixing of the aesthetic cover with respect to the electrical modular unit, as well as better guidance of the adjustment element with respect to the aesthetic cover.

Furthermore, the incorporation of the inner wall prevents a bearing segment from being able to collide with the support frame, which is surrounded by the bearing segments. The inner wall is part of the inner face of the aesthetic cover and is arranged between the support frame and the bearing segments of the adjustment element.

It is contemplated that the inner wall can be continuous and parallel to the outer wall or formed in sections. Preferably, the inner wall will be perpendicular to the wall, in order to thereby provide better guidance in the direction perpendicular to the wall.

The bearing segments may completely surround the support frame. For example, for a square support frame, the bearing segments may be attached by means of the corners they form. This establishes an attachment which compensates for the forces exerted by the elastic elements on the bearing segments, causing not an individual movement for each support segment, but rather a joint movement. Optionally, the attachments can be elastic, allowing some freedom of movement between the bearing segments.

Alternatively, the segments can be individual segments, each being fixed to the aesthetic cover by means of the fixing of the elastic element. In this way, when the aesthetic cover is placed on the support frame, each bearing segment can be movable in order to be supported on the outer wall and the wall.

In general, the elastic element can be in any form, for example, in the form of an arched strip.

In an alternative embodiment, the adjustment element can have only two parallel support segments surrounding the support frame. Parallel should be understood to mean that each of the support segments is arranged on one side of the support frame. The bearing segments surround the support frame at least partially.

In this embodiment, when the aesthetic cover is placed on the support frame, the elastic elements can move each bearing segment laterally. The aesthetic cover, by means of the outer wall, acts as a stop, allowing the bearing segment to be supported on the wall and on the outer wall so that the elastic element bends and performs its function.

In this embodiment, the adjustment element may lack two sides, being formed only by two straight and parallel bearing segments. To complete the profile of the adjustment element, the bearing segments can have side engagement elements located at the ends of each of the bearing segments. Side bearing segments can be attached to said side engagement elements, these side bearing segments establishing an attachment between the two parallel bearing segments. The side bearing segment is an external part which can be the same size as the bearing segments or can be larger and form one side of the aesthetic cover. Optionally, the elastic elements can join two different bearing segments.

According to the preceding embodiment, the elastic element can emerge from one bearing segment and end in another different bearing segment. The fixing members of the elastic element joining different bearing segments are preferably in the middle of the elastic element. Optionally, all the bearing segments can be directly disconnected from one another and only connected by one or more elastic elements.

Preferably, the elastic elements join the bearing segments in parallel, but they can also join same continuously. This embodiment also makes it possible to have a single elastic element between two parallel bearing segments, in which the elastic element emerges from one bearing segment, splits into two to surround the opening of the aesthetic cover and ends in the parallel bearing segment.

In the case of a two-part cover, preferably the outer and/or inner wall is arranged in the cover frame. Optionally, the outer and/or inner wall can also be arranged at least partially in the covering for the cover.

In the case of electrical installations with a plurality of electrical modular units, the aesthetic cover can be a common cover, i.e., a single part. To that end, the aesthetic cover can cover all the electrical modular units, with the adjustment element being coupleable to its rear part to solve the possible misalignments that may occur with respect to the wall.

Therefore, the electrical installation may comprise a plurality of electrical modular units, which have at least one adjustment system. The electrical installation can have a plurality of aesthetic covers for respective support frames of the electrical modular units. For the different aesthetic covers to have a correct alignment, it is necessary that there is an adjustment between the support frames.

Optionally, the support frames are arranged adjacent to one another, being fixed to one another laterally. This allows reducing the risk of significant misalignments such as, overlapping, for example, which cannot be salvaged by the aesthetic cover. The support frames can be fixed to one another by means of engagement elements through elastic or snap fitting. Said engagement elements are arranged on the perimeter of the support frame, corresponding to those of the adjacent support frames.

In an embodiment, the perimeter of the support frame has two corresponding engagement elements. The engagement elements on one side therefore correspond to the engagement elements on the parallel side, thereby allowing the attachment of indefinite support frames consecutively.

Based on the foregoing, the present invention completely solves the problems raised in the state of the art by solving the deficiencies of the already known solutions. The alignment achieved by means of the adjustment element being supported on the wall, and at least one of the bearing segments being supported on the outer edge of the aesthetic cover, gives the assembly a robustness that is previously achieved.

### Description of the figures

Figure 1a shows an exploded view of an embodiment for an electrical modular unit in which the adjustment system is arranged.
Figure 1b shows an exploded view of an alternative embodiment for an electrical modular unit in which the adjustment system is arranged.
Figure 2 shows an exploded view of an embodiment for an installation having two electrical modular units with individual adjustment systems.
Figure 3 shows a perspective view of an installation having electrical modular units and the adjustment system.
Figure 4 shows a perspective view of the inner face of the adjustment system in a pre-assembly position.
Figure 5 shows a section of the adjustment element in an assembly position between the aesthetic cover and the support frame.
Figure 6 shows an embodiment of the adjustment system with an aesthetic cover in two parts.
Figure 7 shows an embodiment of leveling two support frames for elastic coupling with one another.
Figure 8 shows an embodiment of leveling two support frames for snap-on coupling with one another.

### Detailed description of the invention

The figures correspond to non-limiting practical embodiments, where conformational variants are possible, provided that the essence thereof is not altered. The adjustment system comprises an aesthetic cover (1) and an adjustment element (2) which is arranged on an electrical modular unit (4) which can be inserted in a wall (5) comprising a support frame (3). At least one elastic element (2.1) and a bearing segment (2.3) are comprised in the adjustment element (2) and allow a relative elastic movement between the aesthetic cover (1) and the wall (5). An outer wall (1.1) of the aesthetic cover (1) acts as a lateral stop at least for a bearing segment (2.3).

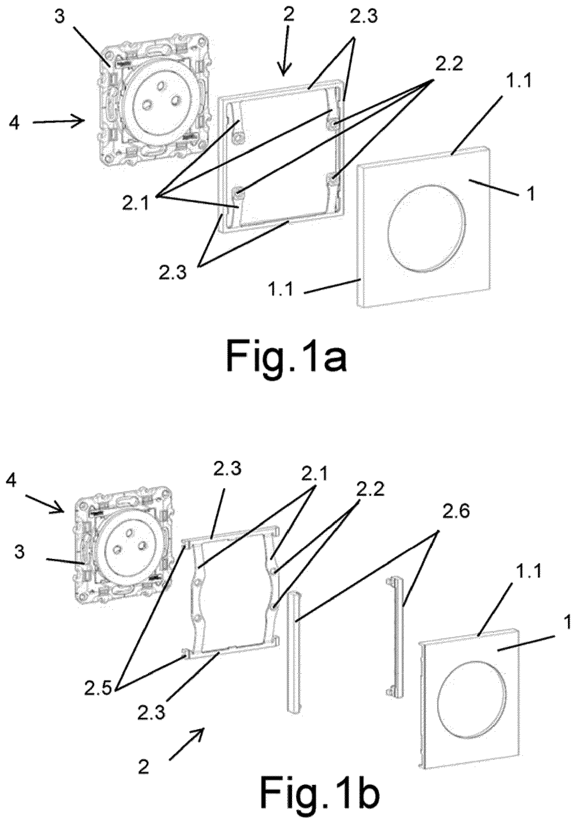

Figure 1^{a} shows an embodiment in which the electrical modular unit (4), in this case a plug, is shown with the support frame (3) that it comprises. The figure does not imply any limitation, where the unit can be a switch, a cover, or any other electrical element suitable for placement thereof.

This exploded view also shows the adjustment system comprising the adjustment element (2) and the aesthetic cover (1). The aesthetic cover (1) can be fixed to the support frame (3) in such a way that allows the adjustment element (2) to be arranged between them.

In this embodiment, the adjustment element (2) has four straight bearing segments (2.3) forming a bearing frame, with all said segments being in the same part. Elastic elements (2.1) in the form of cantilevered extensions are located in the areas close to the corners. The elastic elements (2.1) project towards the inner face of the aesthetic cover (1) from the bearing segments (2.3). These elastic elements (2.1) have fixing members (2.2) at the ends to be fixed to the aesthetic cover (1). The way of fixing shown is by elastic fitting, but it could be by different ways, for example by mechanical attachments such as rivets.

Given that the elastic elements (2.1) are cantilevered and the part is made of plastic materials, the elastic elements (2.1) have a certain flexibility, which allows a separation force to be exerted between the segments (2.3) bearing against the wall (5), and at least one of the bearing segments (2.3) is supported on the outer wall (1.1), and the aesthetic cover (1) which is anchored to the support frame (3). The final assembly position of the adjustment element (2) therefore exerts a force perpendicular to the wall (5) on each elastic element (2.1), where there may be a different force in each one.

Additionally, the elastic elements (2.1) exert forces in directions parallel to the wall (5) between the adjustment element (2) supported on the wall (5) and the aesthetic cover (1) such that the outer wall (1.1) acts as a limit to said elastic movement. Lateral support of the bearing segments (2.3) with respect to the aesthetic cover (1) is therefore allowed, with the outer wall (1.1) being the outer lateral stop or an inner wall (1.3) being the inner lateral stop.

In an alternative embodiment shown in Figure 1b, the adjustment element (2) is formed by two parallel and opposite bearing segments (2.3), each on one side of the support frame (3). Both bearing segments (2.3) are joined by two parallel elastic elements (2.1), which emerge from one bearing segment (2.3) and end in the parallel bearing segment (2.3). Both elastic elements (2.1) are arranged on both sides of the center of the electrical modular unit (4). The fixing members (2.2) are located in the center of the elastic elements (2.1). In this case, the elastic elements (2.1) is the form of an arched strip. The elastic elements (2.1) bend due to the pressure of the aesthetic cover (1) against the support frame (3).

The outer edge (1.1) acts as a support for the bearing segments (2.3), since upon placing the aesthetic cover (1), the elastic elements (2.1) can space different bearing segments (2.3) apart at the same time. The outer wall (1.1) acts as a stop, such that when the elastic elements (2.1) bend, the bearing segment (2.3) is supported on the wall (5) and on the outer wall (1.1). With this double support, a robust support against bending of the elastic elements (2.1) is obtained.

The profile of the adjustment element (2) can be completed by means of placing side bearing segments (2.6), which are fixed at the ends of the bearing segments (2.3) by attachment means (2.5). The fixing of the bearing segments (2.3) and the side bearing segments (2.6) therefore offers robustness. The side bearing segments (2.6) can be rigid or elastic. The side bearing segments (2.6) can be the same as the bearing segments (2.3) or they can be larger and cover the side of the aesthetic cover (1).

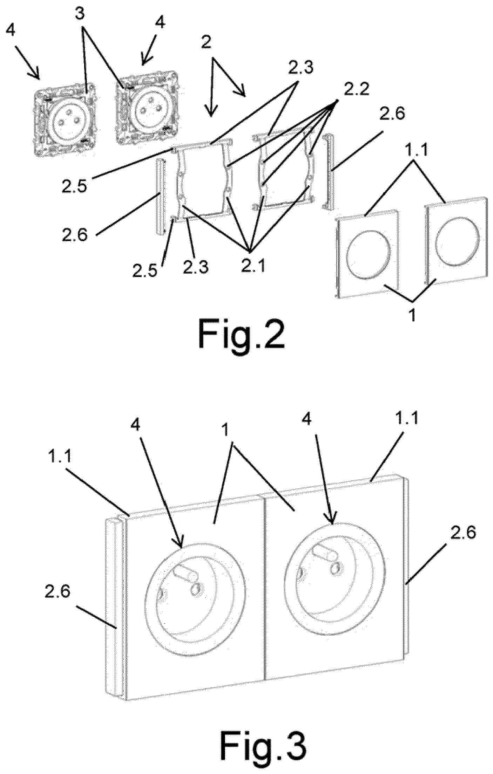

Figure 2 shows an example of modularity by means of two aesthetic covers (1) on two adjoining support frames (3), which are concealed by the adjustment system. Each of the aesthetic covers (1) has its own adjustment element (2), each fixed by means of its own fixing members (2.2) to each aesthetic cover (1). Since the aesthetic covers (1) in this embodiment do not have sides, these are covered at the ends of the installation by means of the side bearing segments (2.6), fixed to the corresponding bearing segments (2.3) by attachment means (2.5).

The final appearance of the installation in the assembly position can be seen in Figure 3, such that only the aesthetic cover (1) on the electrical modular unit (4) is visible to the outside, and in this embodiment, the side bearing segments (2.6). The segments (2.3) of the adjustment element (2) would therefore be concealed between the aesthetic cover (1) and the wall (5).

If the embodiment shown in Figure 1^{a}, in which the adjustment element (2) is completely surrounded by the outer wall (1.1), is used for the installation, only the aesthetic cover (1) would be visible.

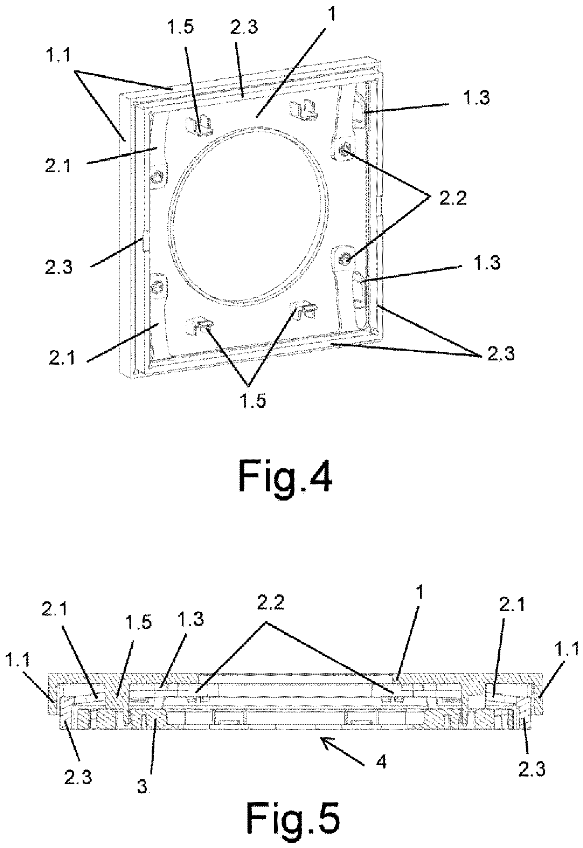

The adjustment system of Figure 4 shows the adjustment element (2) and the aesthetic cover (1) in the pre-assembly position. This figure shows the fixing members (2.2) joining the elastic elements (2.1) to the aesthetic cover (1), in this case, by means of elastic fitting means. Additionally, a plurality of anchors (1.5) which retain the aesthetic cover (1) with the support frame (3) can be seen. During assembly, a certain clearance is allowed in the anchor (1.5) so that the elastic element (2.1) can move elastically in a controlled manner.

The inner wall (1.3) in the aesthetic cover (1) which performs the function of an inner stop in the lateral movement which may occur between the bearing segment (2.3) and the aesthetic cover (1) can also be seen in this figure. In this embodiment, this inner wall (1.3) is discontinuous in the form of different wall sections. Additionally, these walls can have an opening (1.31), in which a protrusion of the bearing segment (2.3) can be introduced in order to establish a stop at the distance between the bearing segment (2.3) and the inner face of the aesthetic cover. (1). A maximum outward adjustment limit which allows keeping both elements stably attached is therefore established.

Figure 5 shows a section of the installation formed by the support frame (3) and the adjustment system, which in turn is formed by the adjustment element (2) and the aesthetic cover (1). The section is in the assembly position, that is, the elastic element (2.1) is in the pressure position, exerting a reaction force against the aesthetic cover (1). In turn, the aesthetic cover (1) is anchored to the support frame (3) by means of the anchors (1.5) as can be seen.

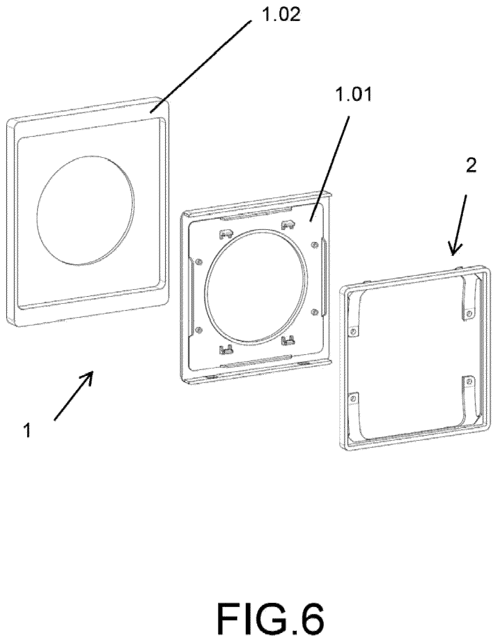

Figure 6 corresponds to an embodiment of the aesthetic cover (1) in two parts. The frame of the cover (1.01) is the part of the aesthetic cover (1) in which the adjustment element (2) is fixed and which acts as a base. The covering (1.02) for the cover is the outermost part of the aesthetic cover (1), which can be made of any material and have any aesthetic finish. In this figure, the frame of the cover (1.01) has two external walls (1.1) while the covering (1.02) for the cover has another two external walls (1.1).

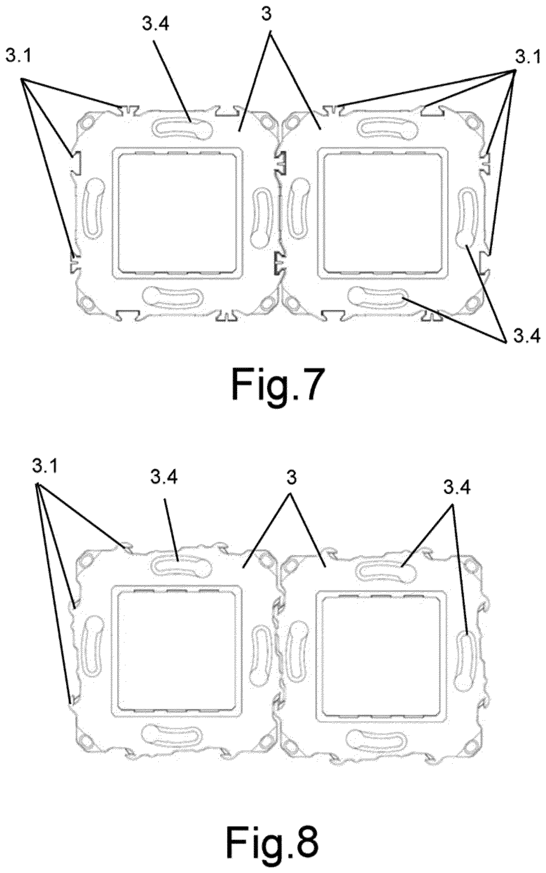

Figure 7 and Figure 8 correspond to two embodiments of the adjacent fixing of the support frames (3) to one another. Preferably, each support frame (3) has two engagement elements (3.1) on each side. In the case of tongue-and-groove engagement elements (3.1), preferably, a tongue and a groove are arranged on each side, repeated in the same order on all sides. This allows the consecutive placement of support frames (3) since the engagement elements (3.1) on each side are complementary.

Figure 7 shows engagement elements (3.1) in the form of elastic fitting. In a first step, a support frame (3) is placed, such that it is screwed into the guides (3.4) allowing the support frame to have certain rotation during its fixing. Subsequently, the second support frame (3) is introduced over the inserted screws. When the position of the second support frame (3) is aligned on the first frame, said alignment is performed by means of the engagement elements (3.1), which allows a single position, ensuring the correct positioning of both by elastic fitting. Possible movements or sliding which may occur when tightening the final fixing means for fixing the support frame (3) to the wall or the installation box are therefore avoided.

In the case of the alternative embodiment of Figure 8, engagement elements (3.1) are provided in the form of fitting members, which allow a small rotation in the last alignment step between the support frames (3). The engagement elements (3.1) have at least one inclined plane that is fixed by rotation and establishes plane-to-plane contact, preventing the respective movement. This way of fixing prevents vertical movement and allows ensuring that the surface of the support frames is coplanar.

## Claims

1. An adjustment system for assembling an electrical modular unit (4) which can be inserted into a wall (5), the adjustment system comprising:
an aesthetic cover (1) which can be fixed to the electrical modular unit (4) by means of a support frame (3) for said unit (4),
an adjustment element (2) which is assembled such that it is fixed to the aesthetic cover (1) and supported on the wall (5), being configured to allow a relative elastic movement between the aesthetic cover (1) and the wall (5) in the direction perpendicular to the wall (5), wherein the adjustment element (2) comprises at least one bearing segment (2.3) for being supported on the wall (5), joined to at least one elastic element (2.1),
**characterized in that** the aesthetic cover (1) has an outer wall (1.1) arranged at least partially around the adjustment element (2), acting as a lateral stop for at least part of the bearing segments (2.3) when it moves elastically.

2. The system according to the preceding claim, **characterized in that** the elastic element (2.1) is fixed to the aesthetic cover (1).

3. The system according to any one of the preceding claims, **characterized in that** the aesthetic cover (1) comprises an inner wall (1.3) which is at least partially surrounded by the adjustment element, acting as a lateral stop for at least part of the bearing segments (2.3) when it moves elastically

4. The system according to any one of the preceding claims, **characterized in that** the bearing segments (2.3) form a bearing frame which is arranged surrounding the support frame (3).

5. The system according to any one of the claims, **characterized in that** there are two bearing segments (2.3) arranged parallel to and surrounding the support frame (3).

6. The system according to the preceding claim, **characterized in that** it comprises at least one side bearing segment (2.6) which can be fixed laterally to said bearing segments (2.3).

7. The system according to any one of the preceding claims, **characterized in that** the bearing segments (2.3) are directly connected to one another by means of elastic elements (2.1).

8. An electrical installation comprising at least one electrical modular unit (4), **characterized in that** it comprises an adjustment system according to any one of the preceding claims.

9. The electrical installation according to claim 8, comprising a plurality of modular units (4), **characterized in that** the support frames (3) of the respective modular units (4) are arranged in an adjacent manner, being fixed to one another laterally.

10. The electrical installation according to claim 9, **characterized in that** the support frames (3) are fixed to one another by means of an engagement element (3.1) through elastic or press fitting.
